# EUROPEAN PATENT APPLICATION

(11) **EP 4 496 238 A1**
(43) Date of publication of application: **22.01.2025**
(21) Application number: 23185962.0
(22) Date of filing: 17.07.2023
(51) Int. Cl.: H04B 7/185, H04W 84/18, H04W 88/16

(54) **A CRITICAL COMMUNICATION METHOD AND SYSTEM**

(71) Applicant: DGT Spólka z o.o., 83-010 Straszyn (PL)
(72) Inventor: Pogorzelski, Adam, 80-298 Gdansk (PL)
(74) Representative: Czub, Krzysztof

(57) **Abstract**

A method of critical communication that combines LoRa technology with MESH technology, characterised in that a gateway is used as the main element, which is fitted with a terminal that allows it to connect to a satellite network, whereby data is transmitted from users via the gateway to the cloud, where it is processed and then made available to other users of the system, while each user can create a (an intermediate) network node.

A critical communication system consisting of a base station, a dispatch application, a client terminal and a client application, characterised in that it has a satellite terminal serving as a gateway and each client terminal can be a (an intermediate) network node.

## Description

The invention consists in a method and system for critical communication. Critical situations are relatively rare in the field of communications, nevertheless, when they occur, they can have a significant impact on the functioning and determine the future of certain structures of a state, an organisation or even an entire country. In such cases, the coordination and communication of public safety bodies are extremely important and cannot rely on systems designed for everyday use, as these may not be available. The system according to the invention enables coordination and communication of a group of entities or devices, especially vehicles, under conditions of total loss of ICT infrastructure caused by extraordinary factors, such as war or natural disasters, e.g. flood, hurricane, earthquake. The system remains operational even in a situation where there is no access to the power grid, it is entirely autonomous and does not need a third party (e.g. a telecoms operator) to function properly to its full capacity. Furthermore, any data transmitted is encrypted to ensure its protection.

Systems specifically designed for critical applications are known. One of these is TETRA - the widely used and repeatedly proven terrestrial trunked radio system. It allows calls to be controlled so that the coordinator can always connect with the person or persons of his/her choice. It also performs other functions necessary for tasks where reliable communication is required. TETRA is a fully critical system, standardised by 3GPP. TETRA has been designed specifically for critical applications and meets the requirements of government agencies and emergency services. This includes features such as AES encryption, network redundancy, the creation of priority channels, as well as the implementation of emergency communication, which provides immediate access to the service in the event of sudden, unforeseen situations. TETRA operates in a dedicated radio band, which means it is less exposed interference from other sources, such as mobile networks or Wi-Fi. TETRA is designed for high reliability and fault tolerance, which is key in critical situations. Unlike mobile communication systems, TETRA has its own power supply, which means it is able to operate even if the mains power supply fails.

However, the TETRA system also has a number of significant limitations, such as its dependence on fixed infrastructure, limited coverage, bandwidth requirements, high deployment and maintenance costs and significant power consumption. It is dependent on fixed infrastructure, which means that communication may be interrupted if the base station is damaged or destroyed. TETRA has limited coverage, so a fixed infrastructure is required to ensure coverage of the entire area. The system requires a certain amount of bandwidth for data transmission, which can affect performance when there is a large number of users. It is expensive to deploy and maintain a TETRA system, as it involves building and maintaining a fixed infrastructure. Critical systems, such as TETRA, need to ensure long-term operation even in crisis situations and therefore usually require large, durable and expensive batteries.

MCPTT (Mission Critical Push To Talk) is another well-known system designed specifically for critical applications. The solution is currently being implemented and allows data to be transmitted at a much higher speed compared to the TETRA system. Consequently, functionalities not available in TETRA can be used here, such as video transmission. However, the system also has a number of limitations, including compared with TETRA, in particular, that it is dependent on the infrastructure of mobile operators and in data transmission encryption (which can increase the risk of cyber-attacks), and needs relatively large energy resources to operate.

In the known communication methods and systems, a combination of LoRa technology with MESH technology can be found, but never in conjunction with satellite communication. It is also worth noting that LoRa technology has been developed for data transmission in IOT networks and not as a critical communication technology.

The method of critical communication according to the invention uses a gateway as the main element, which is fitted with a terminal that allows it to connect to a satellite network. Through the gateway, data from users is transmitted to the cloud, where it is processed and then made available to other users of the system. Each user can create a (an intermediate) network node. Data transmission in the system is carried out conveniently in the ISM band from 433.050 MHz to 434.790 MHz or 868.000 MHz to 870.000 MHz. The ISM band has been chosen due to the fact that as an unlicensed band, it can be used without seeking an approval of the local authorities, which might prove difficult or even impossible in emergency situations.

The critical communication system according to the invention has a satellite terminal serving as a gateway. Each client terminal can be a (an intermediate) network node.

The satellite connection is via an external gateway, which allows broadband internet access via a network of many small satellites placed in a low Earth orbit (LEO). Thereby, it is possible to obtain a fast and stable internet connection also in areas with a poor terrestrial infrastructure or even in the absence thereof. The gateway provides global coverage, enabling internet access in hard-to-reach areas, at sea and in remote regions where traditional terrestrial networks are limited or unavailable. In addition, the gateway provides low delay (ping) compared to traditional satellite services. This makes it more suitable for applications that require fast response. The last key parameter of the gateway, from the system perspective, is its mobility. This means that the gateway needs to be a portable solution that can be installed and used in different locations, which is particularly important in emergency situations, where fast and reliable connectivity is needed.

There are two types of nodes in both the method and system in the network: end nodes and intermediate nodes. End nodes are represented by client terminals - endpoints, where communication can begin and end. Intermediate nodes are represented by the connections between client terminals, which are relay points in the MESH network and allow data to be transmitted over long distances.

The solution according to the invention is characterised by the decentralised nature of communication, where each user and user's client terminal can act as a network node, thereby allowing communication to be maintained, even if several nodes simultaneously become inoperable (e.g. fail or are destroyed). With the LoRa technology used in the method and in the system, data transmission over long distances is possible, while MESH enables peer-to-peer networking, which increases reliability and resilience. In this way, if one node is out of action, data transmission will still take place through the other nodes in the network.

There are many benefits to the critical communication method and system based on the combination of the LoRa and MESH technologies and the satellite transmission technology. First and foremost, they enable secure and reliable communication between users, even in areas where traditional operator services (e.g. telephone network, mobile network) are not available. The method and the system can be used by different groups, including, for example, emergency services, construction crews or groups of tourists. In the case of the GPS position transmission, the method and the system based on the LoRa and MESH combination enable the precise location of users, which can be particularly useful when rescuing life and property of users or during search and rescue operations. As communication is not dependent on any mobile operators' infrastructure, the method and the system are more autonomous and resilient to potential failures of the mobile network infrastructure. Owing to the use of the LoRa and MESH technologies, the method and the system remain operational even if the mobile network is not working or is overloaded, which is particularly important in emergency situations. With the option of connecting a satellite terminal (in particular Starlink) to the base station, the base station can be connected to the internet, thereby allowing transmission to any location in the world even in the absence of any radio network, including 2G, 3G, 4G, 5G and the absence of a cable or fibre optic network.

Other advantages of the method and system include: greater coverage, increased bandwidth, lower cost and lower power consumption. The method and system provide wider coverage, making their use more effective where fixed infrastructure is limited or non-existent. A single set of the system installed enables communication between individual users in situations where the distance between them is even 150 kilometres. Furthermore, there is an option of using base stations as repeaters and thereby covering virtually any area, e.g. the entire country. Bandwidth is split between all the users, which enables much better scalability. In the method and the system being described, the network infrastructure is more flexible, there is no need to build and maintain any fixed infrastructure, which reduces the cost. Owing to the LPWAN technology, the power management technology, and the satellite network use, the system according to the invention features significantly lower power consumption than those already known. As a result, devices using such a system can run much longer on a single charge, which is a significant advantage in emergency situations, where access to chargers may be limited or even impossible. The electricity consumption of the system is low enough to allow the base station to be powered from either a 12V or 24V car battery for at least 30 days. The client terminal, on the other hand, can operate for at least 30 days without recharging when powered by a single battery the size of an AA battery.

The method and the system also provide better privacy protection based on AES encryption. This encryption algorithm ensures secure data transmission and protects against eavesdropping or other attacks on user privacy. The method and the system allow the current position of users - up to several hundred at a time - to be transmitted in encrypted form by a single set. In addition, the system provides the ability to transmit any text messages in encrypted form in the group relationship (one-to-many) or the individual one (one-to-one).

One element of the system that may prove crucial for many users is the possibility of using a dispatch station in the system. This allows each system participant to communicate with the dispatcher (the person in charge) in both the group and the individual mode. The dispatch console allows the use of a map system and the real-time mapping of the individual participants positions. Using the satellite gateway, it is possible to create a situation, where the dispatcher can be in a different country than the system users.

The solutions according to the invention are illustrated below, with the individual figures representing:

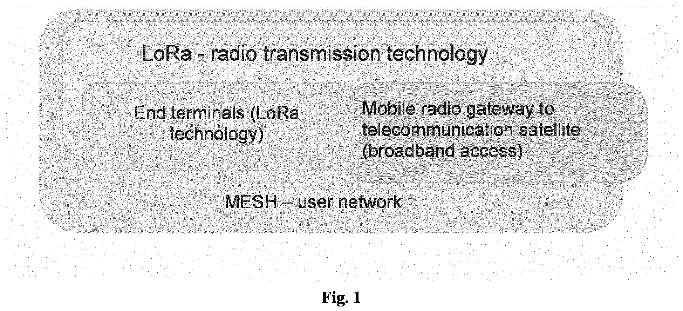

- fig. 1: a general schematic diagram of the method,

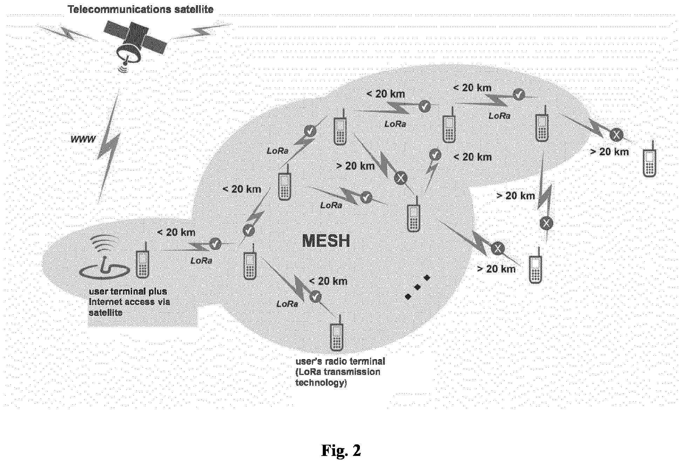

- fig. 2: a general schematic diagram of the system,

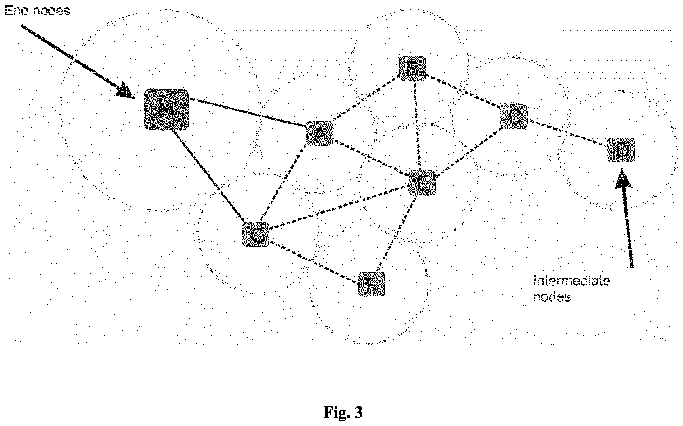

- fig. 3: a diagram depicting the communication network based on the method and system with the end users shown.

The critical communication method uses LoRaWAN technology, MESH technology, and - as the main element - a gateway, which is fitted with a terminal connecting to a satellite network. The LoRaWAN technology transmission is carried out in the 868 MHz band. The satellite connection is via the Starlink system, using an RV model terminal. Data is transmitted from users via the gateway to the cloud, where it is processed and then shared with other users of the system.

The critical communication system according to the invention consists of the following components: a base station, a dispatching application, a client terminal and a client application. The seven end-user client terminals (A, B, C, D, E, F, G) are located at a distance of 60 km from each other. The terminals are fitted with external signal antennas mounted on the roofs of users' cars. The dispatching application and the client application run on Android-based devices. A Starlink model RV satellite terminal is also part of the system, serving as a gateway. The client terminals are powered by built-in batteries, running up to 30 days without recharging. The base station is powered from the 12V car installation.

There are two types of nodes in the network: end nodes and intermediate nodes. End nodes are the users' client terminals (A and G), which are the end points where communication can begin and end. Intermediate nodes are the connections between users' client terminals (A, B, C, D, E, F, G), which are relay points in the MESH network, allowing data to be transmitted over long distances with the minimum energy consumption. Any of the end-user terminals can connect to the Starlink gateway, but only terminals A and G are within its direct radio range. This allows fast data transmission from the end-user terminals to the Starlink gateway and back. Each end-user terminal can communicate directly with a user terminal in its immediate vicinity, but it can also use inter-node connections to send data to a user terminal that is outside the direct range. Each end-user terminal can serve as a relay point in the network, providing high redundancy in the event of node failures. All data transmitted over the network is encrypted using the AES standard, which ensures data security and privacy. Users can send real-time text messages and GPS positions between each other, thereby communicating effectively in critical situations.

## Claims

1. A method of critical communication that combines LoRa technology with MESH technology, **characterised in that** a gateway is used as the main element, which is fitted with a terminal that allows it to connect to a satellite network, whereby data is transmitted from users via the gateway to the cloud, where it is processed and then made available to other users of the system, while each user can create a (an intermediate) network node.

2. The method according to claim 1, **characterised in that** data transmission in the system is carried out in the ISM band from 433.050 MHz to 434.790 MHz.

3. The method according to claim 1, **characterised in that** data transmission in the system is carried out in the ISM band from 868.000 MHz to 870.000 MHz.

4. A critical communication system consisting of a base station, a dispatch application, a client terminal and a client application, **characterised in that** it has a satellite terminal serving as a gateway and each client terminal can be a (an intermediate) network node.
